Europäisches Patentamt

European Patent Office

Office européen des brevets

(11) Veröffentlichungsnummer: **0 271 803**
**A2**

## (12) EUROPÄISCHE PATENTANMELDUNG

(21) Anmeldenummer: 87118123.6

(22) Anmeldetag: 08.12.87

(51) Int. Cl.4: **B29B 7/76**

(30) Priorität: **19.12.86 DE 3643431**

(43) Veröffentlichungstag der Anmeldung:
**22.06.88 Patentblatt 88/25**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Ersfeld, Heinrich**
**Biesenbach 23**
**D-5090 Leverkusen 3(DE)**
Erfinder: **Schulte, Klaus, Dipl.-Ing.**
**Kurt-Schumacher-Ring 91b**
**D-5090 Leverkusen 1(DE)**

(54) Vorrichtung zum Vermischen von mindestens zwei fliessfähigen, massiven oder zelligen Kunststoff bildenden Reaktionskomponenten.

(57) Um bei einer Vorrichtung zum Vermischen von mindestens zwei fließfähigen, massiven oder zelligen Kunststoff bildenden Reaktionskomponenten, in welcher diese Komponenten mittels Einspritzdüsen (6, 7) in eine Mischkammer (2) eingedüst werden, eine Verschlechterung der Vermischungsqualität durch Strahlablenkung, welche auf einer ungenauen Position des vorderen Endes (15) der Düsennadel (10) zur Düsenbohrung (16) beruht, zu vermeiden, ordnet man im Mantel des vorderen Endes (15) der Düsenbohrung (16) und/oder in der Wandung (17) der Düsenbohrung (16) mindestens einen Kanal (18) an und führt das vordere Ende (15) der Düsennadel (10) in jeder Stellung der Düsennadel (10) in der Düsenbohrung (16).

FIG. 1

EP 0 271 803 A2

# Vorrichtung zum Vermischen von mindestens zwei fließfähigen, massiven oder zelligen Kunststoff bildenden Reaktionskomponenten

Die Erfindung betrifft eine Vorrichtung zum Vermischen von mindestens zwei fließfähigen, massiven oder zelligen Kunststoff bildenden Reaktionskomponenten, bestehend aus einem eine Mischkammer mit Auslaßöffnung enthaltenden Gehäuse, wobei Zuleitungen zu in die Mischkammer weisenden Einspritzdüsen führen und jede Einspritzdüse eine verstellbare Düsennadel und eine Düsenbohrung aufweist, wobei das mit der Düsenbohrung korrespondierende Ende der Düsennadel und die Düsenbohrung in ihrem Durchmesser aufeinander abgestimmt sind.

Die Verarbeitung derartiger Reaktionskomponenten, beispielsweise von Polyurethan-Systemen, erfolgt vorzugsweise nach der Hochdruck-Gegenstrom-Injektionsmethode, Mindestens zwei Komponenten werden in eine Mischkammer bei Drücken von 100 bis 250 bar, und in speziellen Fällen weit darüber hinaus, gegeneinander injiziert. Zur Erzielung einer innigen Vermischung der Reaktionskomponenten werden die Injektionsdrücke über Injektionsdüsen durch Einstellung eines Drosselquerschnittes den jeweiligen Anforderungen angepaßt. Je nach Typ der Vorrichtung (Mischkopf) weicht der konstruktive Aufbau solcher Einspritzdüsen voneinander ab. In handelsüblichen Mischköpfen werden Lochdüsen oder Nadeldüsen benutzt. Die Einstellung der Drücke über Lochdüsen wird mittels austauschbarer Lochblenden unterschiedlichen Lochdurchmessers vorgenommen. Der Ein-und Ausbau ist sehr zeitraubend. Deshalb werden meist Nadeldüsen aufweisende Einspritzdüsen eingesetzt. Dabei ist die Düsennadel zur Einstellung des Injektionsdruckes in ihrer Position zur Düsenbohrung variabel. Der so gebildete drosselnde Ringspalt führt bei niedrigviskosen Flüssigkeiten zu einer kegelförmigen Strahlaufweitung. Die hierbei entstehende Tröpfchenbildung begünstigt zunehmend die Vermischung der Reaktionskomponenten und ist somit letztendlich für die Formteilqualität mitverantwortlich.

Untersuchungen an verschiedenen handelsüblichen Düsengeometrien haben gezeigt, daß die Ausbildung des Düsenspritzbildes mit dem resultierenden Mischergebnis korreliert. Bei der Vermischung höherviskoser Reaktionskomponenten treten Vermischungsprobleme auf, weil solche Komponenten bei der Verdüsung dazu neigen, einen kompakten Strahl zu bilden. Die unzureichende Strahlaufweitung verschlechtert die Vermischungshomogenität.

Man kann zwar bei solchen Rohstoffen durch Verarbeitung unter erhöhten Temperaturen die Viskosität erniedrigen. Dies führt aber zu Nachteilen bei der Lagerstabilität sowie zu einer veränderten Reaktivität der Systeme.

Ist die Führung der Düsennadel unzureichend, so verursacht die dadurch hervorgerufene Strahlablenkung ebenfalls eine schlechtere Vermischung.

Bei Düsennadeln mit konischem Ringspalt zum Einstellen des Drosselquerschnittes filtert dieser feine Ringspalt zudem Sedimente aus, wodurch ebenfalls die nachteiligen Strahlablenkungen verursacht werden.

Es besteht die Aufgabe, die Vorrichtung der eingangs genannten Art so zu verbessern, daß die Vermischungsqualität verschlechternde Strahlablenkungen, insbesondere bei der Verarbeitung höherviskoser Reaktionskomponenten, vermieden werden, aber die Einstellbarkeit eines Drosselquerschnittes zum Variieren des Injektionsdruckes erhalten bleibt.

Diese Aufgabe wird dadurch gelöst, daß im Mantel des vorderen Endes und/oder in der Wandung der Düsenbohrung mindestens ein Kanal angeordnet ist, und daß das vordere Ende der Düsennadel in jeder Stellung in der Düsenbohrung geführt ist.

Dadurch, daß sich das Ende der Düsennadel ständig in der Düsenbohrung befindet, kann keine unkontrollierte Strahlablenkung mehr erfolgen. Die Düsenbohrung ist im wesentlichen nur noch Führung für das Ende der Düsen nadel, während die Drosselstelle nunmehr je nach Konstruktion an den Eingang oder den Ausgang des Kanals oder in den Kanal selbst verlegt ist. Die Gefahr des Ausfilterns von Sedimenten ist wegen der günstigeren Strömungsausbildung wesentlich herabgesetzt. Durch Anordnung mehrerer, d.h. von mindestens zwei, Kanälen läßt sich insbesondere bei der Verarbeitung höherviskoser Komponenten eine bessere Strahlaufweitung erzielen, weil sich jeder Komponentenstrahl aus einer der zugehörigen Anzahl von Kanälen entsprechenden Anzahl von Einzelstrahlen zusammensetzt, welche sich gegenseitig im Sinne einer Vergrößerung des Streuwinkels beeinflussen.

Wie bereits erwähnt, läßt sich der Drosselquerschnitt je nach Konstruktion an verschiedenen Stellen anordnen:

Gemäß einer ersten Ausführungsform endet der Kanal innerhalb der Düsenbohrung und die Stirnkante des vorderen Endes der Düsennadel dient als Steuerkante.

Diese Ausführungsform dürfte die optimale sein, weil bei ihr die Drosselstelle am nächsten zur Mischkammer gelegen ist. Es ist offensichtlich, daß hierbei die Einstellbarkeit durch Verstellung der Düsennadel in axialer Richtung gegeben ist. Die Verstellung erfolgt in an sich bekannter Weise, beispielsweise von Hand mittels einer Stell-oder Anschlagschraube. Auch eine hydraulische einstellung ist möglich. An sich kann man sich aller bisher bekannten Techniken zur Verstellung der Düsennadel bedienen. Es sind sowohl entsprechend gestaltete Düsen mit stets offener Düsenbohrung verwendbar, wobei die Umschaltung von Kreislauf auf Mischen durch einen Steuerkolben mit Kreislaufnuten erfolgt, als auch solche Düsen, bei denen die Düsennadel selbst die Steuerfunktion von Kreislauf auf Mischen übernimmt.

Gemäß einer weiteren Ausführungsform ist der Kanal am Ende der Düsennadel angeordnet und die von der Mischkammer wegweisende Kante der Düsenbohrung dient als Steuerkante.

Auch hier erfolgt die Einstellung der Düsennadel in axialer Richtung. Der Drosselquerschnitt liegt jedoch am Eingang des Kanals. Deshalb erfolgt eine erste Druckentspannung des Komponentenstrahls am Ausgang des Kanals und eine weitere am Ausgang der Düsenbohrung. Eine solche stufenweise Entspannung kann im Zusammenhang mit der Bildung von Nukleationskeimen für den Start der Reaktion Vorteile bringen.

Gemäß einer dritten Variante besteht der Kanal aus zwei Abschnitten, von denen der eine Abschnitt im vorderen Ende der Düsennadel und der andere Abschnitt, mit dem ersten Abschnitt überlappbar, in der Wandung der Düsenbohrung angeordnet ist, und die Stirnkanten und/oder die Längskanten dieser Abschnitte stellen Steuerkanten dar.

Auch hier erfolgt also die Druckentspannung in zwei Stufen. Wird die Verstellbarkeit durch axiales Verschieben der Düsennadel bewirkt, dienen die Stirnkanten als Steuerkanten; wird sie durch Verdrehen bewirkt, bilden die Längskanten die Steuerkanten. Bie gleichzeitigem axialen Verstellen und Verdrehen dienen alle Kanten als Steuerkanten zur Bildung des Drosselquerschnittes.

Gemäß einer speziellen Ausführungsform ist der im vorderen Ende der Düsennadel angeordnete Abschnitt des Kanals lediglich als zur Mischkammer hin offene, vorzugsweise kurze, Ausnehmung ausgebildet.

Es versteht sich, daß hierbei die Begrenzungskante als Steuerkante dient.

Gemäß einer besonderen Ausführungsform mündet der in der Wandung der Düsenbohrung angeordnete Kanal schräg in die Düsenbohrung ein.

Auf diese Weise läßt sich der Strahl beispielsweise gezielt entgegen den Mischkammerauslaß richten. Bei mehreren Kanälen mit symmetrischer Anordnung treffen sich die Einzelstrahlen und verbessern die Strahlaufweitung.

Vorzugsweise verjüngt sich das Ende des Kanals.

Je nach dem Grad der Verjüngung, sei es durch Verflachung, seitliche Einschnürung oder Abschrägung, ist ein kürzerer oder längerer Verstellweg erforderlich, wobei der längere Verstellweg logischerweise größere Genauigkeit hinsichtlich der Einstellung eines bestimmten Injektionsdruckes bietet.

Gemäß einer weiteren besonderen Ausführungsform verläuft der Kanal unter einem Winkel, d.h. spiralförmig.

Dabei ist der austretende Strahl mit Drall behaftet, wodurch eine bessere Zerstäubung verursacht wird. Diese läßt sich noch dadurch verbessern, daß bei der Anordnung mehrere Kanäle spiegelbildlich zueinander angeordnet sind. Dabei treffen die einzelnen Strahlen nach ihrem Austritt aufeinander und vergrößern den Streuwinkel, bevor sie mit dem Gesamtstrahl der anderen Komponente zusammentreffen.

Sind mehrere Kanäle vorgesehen, sind diese vorzugsweise symmetrisch um die Mittelachse der Düsennadel angeordnet.

Erfahrungsgemäß ergibt die symmetrische Anordnung die beste Vermischungsqualität. Dabei kann es sinnvoll sein, einander gegenüberliegende Einspritzdüsen so auszurichten, daß die einander entsprechenden Kanäle jeder Einspritzdüse exakt in der gleichen Achse liegen oder daß sie exakt dazwischenliegen.

Gemäß einer weiteren besonderen Ausführungsform weisen die Kanäle unterschiedliche Längen auf.

Diese Ausgestaltung macht es möglich, durch entsprechenden Hub der Düsennadel weitere Kanäle freizugeben oder abzudecken, wodurch der Injektionsdruck in weiten Grenzen variierbar ist. Hierbei ist es besonders zweckmäßig, auf Symmetrie zu achten.

In der Zeichnung ist die neue Vorrichtung, insbesondere die Enspritzdüse, in mehreren Ausführungsbeispielen rein schematisch dargestellt und nachstehend näher erläutert. Es zeigen:

Fig. 1 die Vorrichtung gemäß einem ersten Ausführungsbeispiel im Längsschnitt,

Fig. 2 eine weitere Ausführungsform der Einspritzdüse im Längsschnitt,

Fig. 3 einen Schnitt gemäß Linie A-B in Fig. 2,

Fig. 4 eine dritte Ausführungsform der Einspritzdüse im Längsschnitt,

Fig. 5 einen Schnitt gemäß Linie C-D in Fig. 4,

Fig. 6 eine vierte Ausführungsform der Einspritzdüse im Längsschnitt,

Fig. 7 einen Schnitt gemäß Linie E-F in Fig. 6,

Fig. 8 eine fünfte Ausführungsform der Einspritzdüse im Längsschnitt,

Fig. 9 einen Schnitt gemäß Linie G-H in Fig. 8,

Fig. 10 eine sechste Ausführungsform der Einspritzdüse im Längsschnitt,

Fig. 11 einen Schnitt gemäß Linie I-K in Fig. 10,

Fig. 12 eine siebente Ausführungsform einer Einspritzdüse im Längsschnitt,

Fig. 13 einen Schnitt gemäß Linie L-M in Fig. 12,

Fig. 14 eine achte Ausführungsform der Einspritzdüse im Längsschnitt,

Fig. 15 einen Schnitt gemäß Linie N-O in Fig. 14,

Fig. 16 eine Abwicklung der Einzelheit P in Fig. 14 zur Demonstration einer Düsennadeleinstellung,

Fig. 17 eine Abwicklung der Einzelheit P in Fig. 14, jedoch in einer anderen Düsennadeleinstellung als in Fig. 16,

Fig. 18 einen Schnitt gemäß Linie N-O in Fig. 14, jedoch mit einer (gestrichelten) Düsennadeleinstellung gemäß Fig. 17,

Fig. 19 eine neunte Ausführungsform der Einspritzdüse im Längsschnitt,

Fig. 20 einen Schnitt gemäß Linie Q-R in Fig. 19,

Fig. 21 eine zehnte Ausführungsform der Einspritzdüse im Längsschnitt und

Fig. 22 einen Schnitt gemäß Linie S-T in Fig. 21.

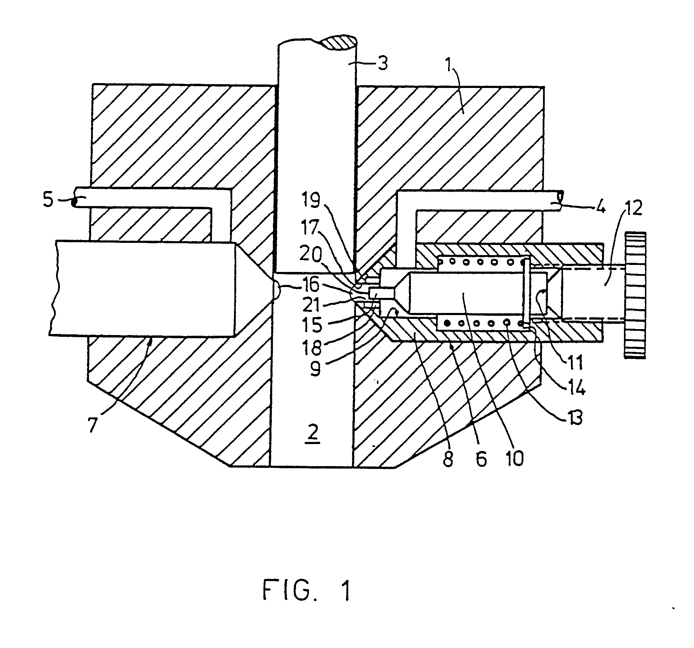

In Fig. 1 besteht die Vorrichtung aus einem Mischkopfgehäuse 1, welches eine Mischkammer 2 mit Ausstoßkolben 3 umgibt. Zuleitungen 4, 5 münden über Einspritzdüsen 6, 7 in die Mischkammer 2. Jede der Einspritzdüsen 6, 7 besteht aus einem Gehäuse 8, welches eine Führung 9 für eine Düsennadel 10 aufweist. Gegen das hintere Ende 11 liegt eine Stellschraube 12 an. Eine sich im Gehäuse 8 und an einem Absatz 14 der Düsennadel 10 abstützende Feder 13 sorgt dafür, daß die Düsennadel 10 die mittels der Stellschraube 12 einjustierte Position beibehält. Das vordere Ende 15 der Düsennadel 10 ist als Zapfen ausgebildet und ist in einer Düsenbohrung 16 ständig geführt. In der Wandung 17 der Düsenbohrung 16 sind Kanäle 18 angeordnet, wobei die Stirnkante 19 der Kanäle 18 und die Stirnkante 20 der Düsennadel 10 Steuerkanten bilden, mit denen sich der gewünschte Drosselquerschnitt einjustieren läßt.

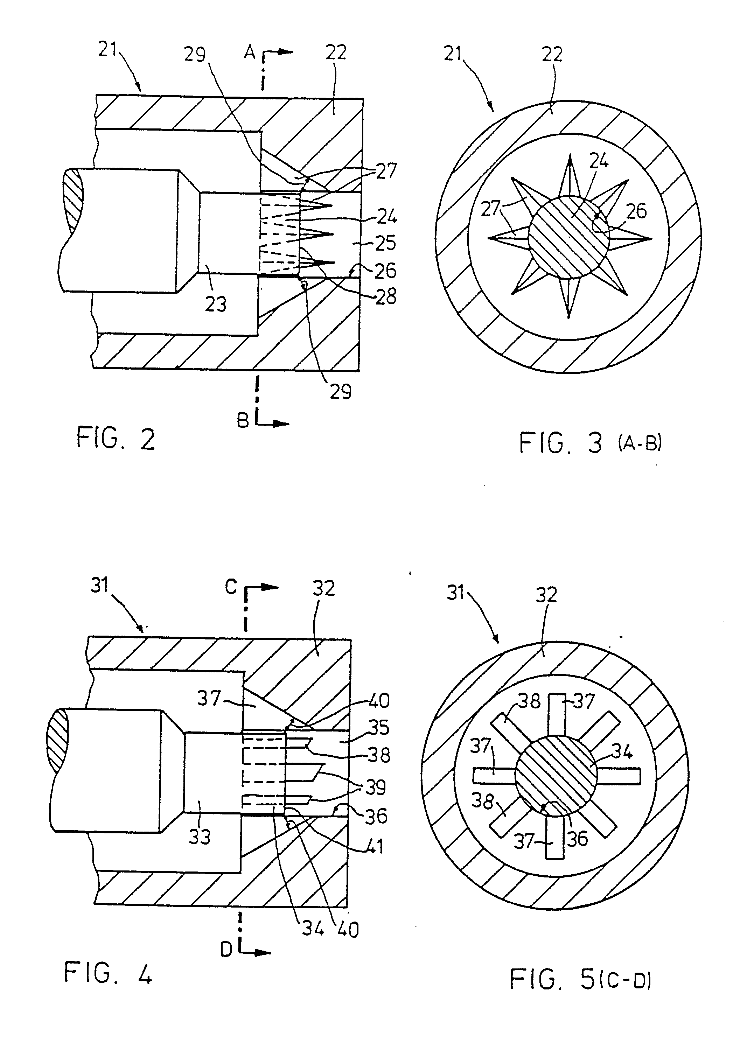

In Fig. 2, 3 besteht die Einspritzdüse 21 aus einem Gehäuse 22 und einer Düsennadel 23. Das vordere Ende 24 der Düsennadel 23 ragt ständig in eine im Gehäuse 22 vorgesehene Düsenbohrung 25 mit Paßsitz hinein. In deren Wandung 26 sind Kanäle 27 angeordnet, welche sich sowohl in axialer Richtung als auch in radialer Richtung verjüngen. Die Stirnkante 28 des vorderen Endes 24 der Düsennadel 23 dient als Steuerkante zum Bilden des Drosselquerschnittes 29. Dies ist jene Gesamtquerschnittsfläche der acht kleinsten Querschnittsflächen der acht Kanäle 27, welche sich zwischen dieser Steuerkante 28 und der Wandung der Kanäle 27 erstrecken. In Fig. 2 sind die Anteile des Drosselquerschnittes 29 des oberen und des unteren Kanals 27 eingezeichnet.

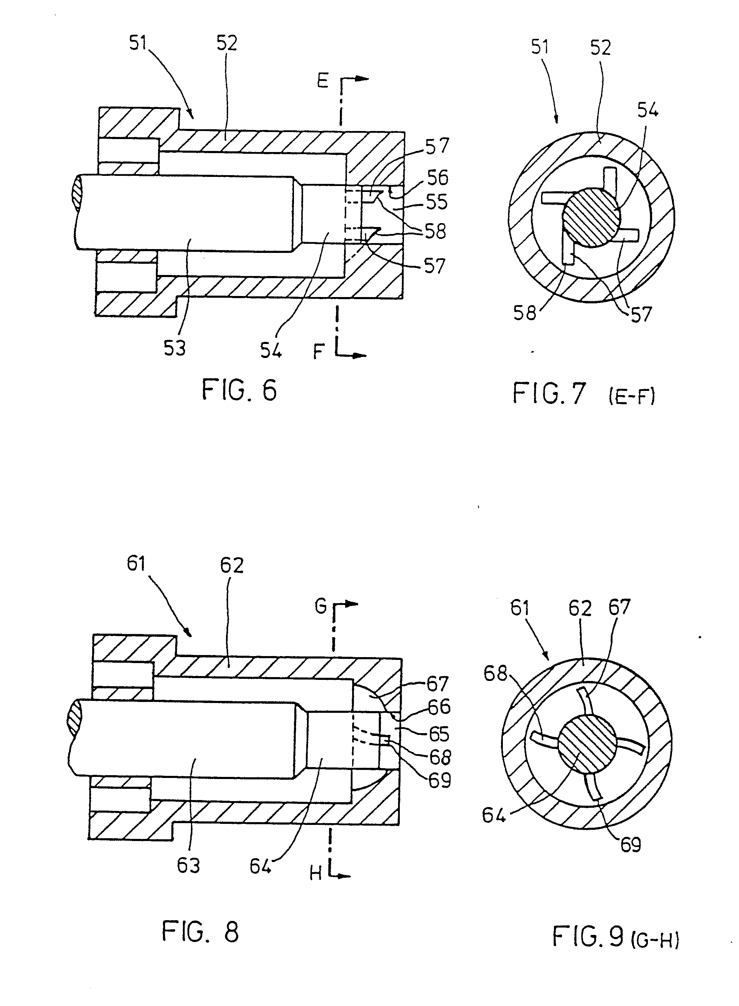

In Fig. 4, 5 besteht die Einspritzdüse 31 aus einem Gehäuse 32 und einer Düsennadel 33. Das vordere Ende 34 der Düsennadel 33 ragt ständig in eine im Gehäuse 32 vorgesehene Düsenbohrung 35 mit Paßsitz hinein. In deren Wandung 36 sind Kanäle 37, 38 unterschiedlicher Länge angeordnet. Sie weisen schräge Stirnkanten 39 auf. Dadurch, daß die Kanäle 37, 38 in ihrer Länge hinsichtlich der Schräge der Stirnkanten 39 abgestimmt sind, läßt sich der angedeutete Drosselquerschnitt 40 in einem großen Bereich variieren, wobei die Stirnkante 41 des vorderen Endes 34 der Düsennadel 33 zusammen mit den Wandungen der acht Kanäle 37, 38 den gesamten Drosselquerschnitt 40 bildet.

In Fig. 6, 7 besteht die Einspritzdüse 51 aus einem Gehäuse 52 und einer Düsennadel 53. Das vordere Ende 54 der Düsennadel 53 ragt ständig in eine im Gehäuse 52 vorgesehene Düsenbohrung 55 mit Paßsitz hinein. In deren Wandung 56 sind tangential einmündende Kanäle 57 vorgesehen. Durch die tangentiale Anordnung treten die Einzelstrahlen mit Drall in die Düsenbohrung 55 ein, bevor sie in die nicht dargestellte Mischkammer gelangen.

In Fig. 8, 9 besteht die Einspritzdüse 61 aus einem Gehäuse 62 und einer Düsennadel 63. Das vordere Ende 64 der Düsennadel 63 ragt ständig in eine im Gehäuse 62 vorgesehene Düsenbohrung 65 hinein. In der Wandung 66 sind Kanäle 67, 68 spiralförmig eingelassen, wobei die Kanäle 67 gegensinnig zu den Kanälen 68 angeordnet sind. Die Stirnkante 69 des vorderen Endes 64 der Düsennadel 63 dient als Steuerkante zum Einstellen des Drosselquerschnittes.

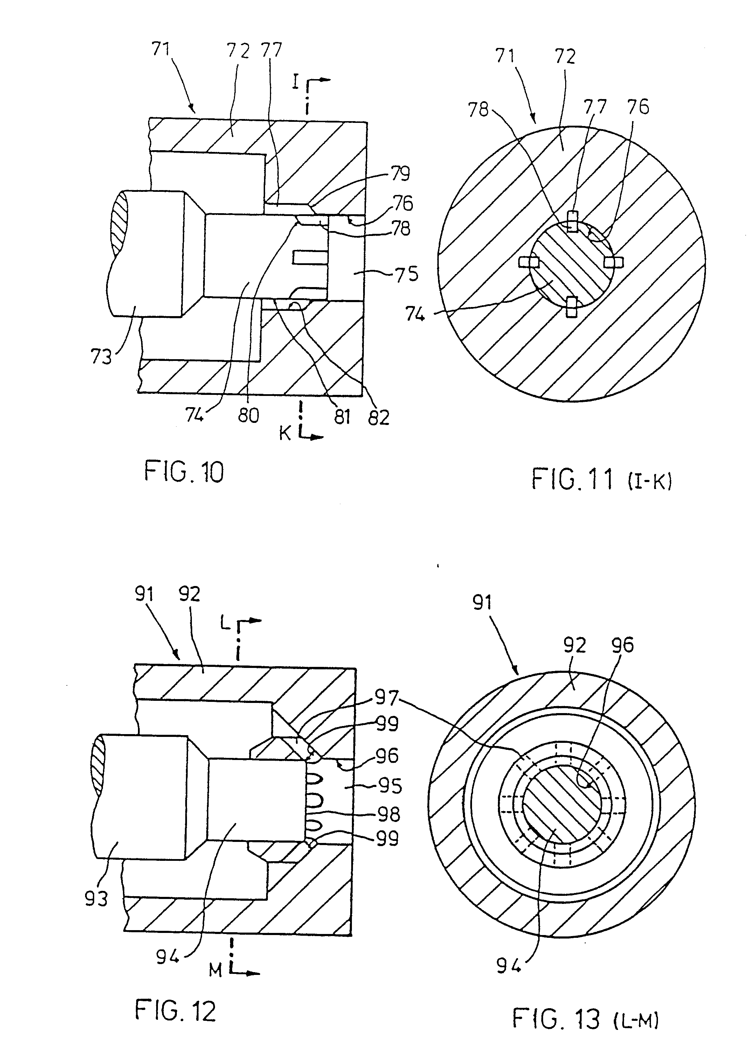

In Fig. 10, 11 besteht die Einspritzdüse 71 aus einem Gehäuse 72 und einer Düsennadel 73. Das vordere Ende 74 der Düsennadel 73 ragt ständig in eine im Gehäuse 72 vorgesehene Düsenbohrung 75 mit Paßsitz hinein. In der Wandung 76 sind Abschnitt 77 von Kanälen vorgesehen, denen die Abschnitte 78 zugeordnet sind, welche im vor deren Ende 74 fluchtend angeordnet sind. Bei axialer Verstellbarkeit der Düsennadel 73 dienen die die Abschnitt 77, 78 begrenzenden Stirnkanten 79, 80 als Steuerkanten; bei Verdrehbarkeit bilden die Längskanten 81, 82 die Steuerkanten zum Einstellen des Drosselquerschnittes. Bei gleichzeitiger axialer Verstellbarkeit und Verdrehbarkeit dienen die Stirnkanten 79, 80 und die Längskanten 81, 82 gleichzeitig als Steuerkanten.

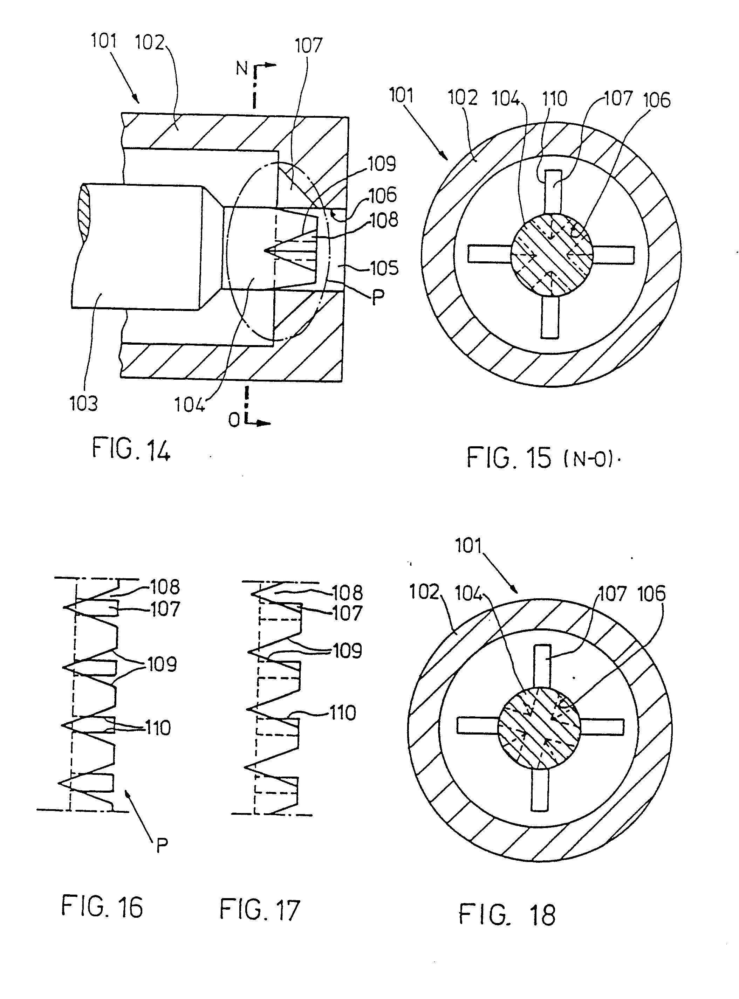

In Fig. 12, 13 besteht die Einspritzdüse 91 aus einem Gehäuse 92 und einer Düsennadel 93. Das vordere Ende 94 der Düsennadel 93 ragt ständig in eine im Gehäuse 92 vorgesehene Düsenbohrung 95 hinein. Durch die Wandung 96 münden acht als Schrägbohrungen ausgebildete Kanäle 97. Die Stirnkante 98 des vorderen Endes 94 der Düsennadel 93 dient als Steuerkante zum Einstellen des gestrichelt angedeuteten Drosselquerschnittes 99, welcher sich aus den einzelnen Anteilen aller Kanäle 79 zusammensetzt.

In Fig. 14 bis 18 besteht die Einspritzdüse 101 aus einem Gehäuse 102 und einer Düsennadel 103. Das vordere Ende 104 der Düsennadel 103 ragt ständig in eine im Gehäuse 102 vorgesehene Düsenbohrung 105 hinein. In der Wandung 106 sind Abschnitte 107 von Kanälen vorgesehen, denen Abschnitte 108 im vorderen Ende 104 der Düsennadel 103 zugeordnet sind. Die Abschnitte 108 sind als kurze dreieckige Ausnehmungen gestaltet, deren Begrenzungskanten 109 zusammen mit den Längskanten 110 der Abschnitte 107 Steuerkanten zum Einstellen eines Drosselquerschnit tes durch Verdrehen der Düsennadel 103 bilden. Fig. 16 zeigt (entsprechend Fig. 14 und 15) die Düsennadelstellung für den größtmöglichen Durchgang in der geometrischen Abwicklung; Fig. 17 (entsprechend Fig. 18) in der gleichen Darstellungsweise einen auf nahezu 0 gedrosselten Durchlaßquerschnitt.

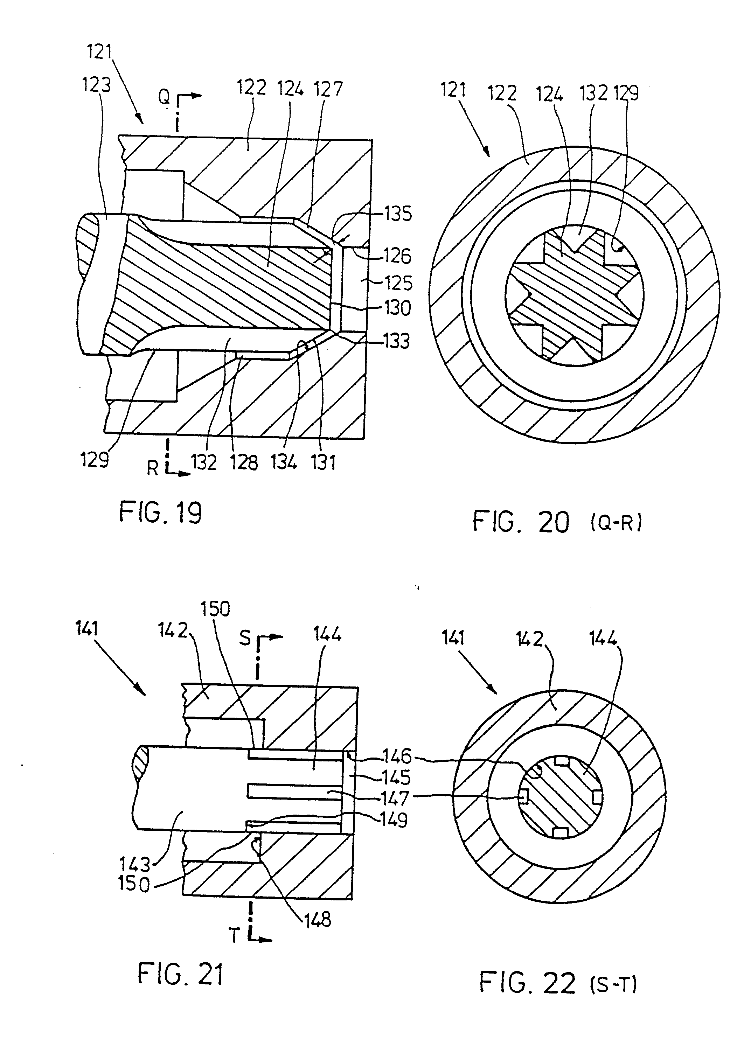

In Fig. 19, 20 besteht die Einspritzdüse 121 aus einem Gehäuse 122 und einer Düsennadel 123. Das vordere Ende 124 der Düsennadel 123 ragt ständig in eine im Gehäuse 122 vorgesehene Düsenbohrung 125 hinein. Sie weist drei Absätze 126, 127, 128 auf. Der Absatz 126 besitzt den geringsten Querschnitt. Der zu Düsennadel 123 hin anschließende Absatz 127 erweitert sich konisch zum Absatz 128, welcher dem vorderen Ende 124 der Düsennadel 123 als Paßführung dient. Im Mantel 129 des vorderen Endes 124, dessen Stirnfläche 130 eine dem Absatz 127 entsprechende Abschrägung 131 aufweist, sind Kanäle 132 angeordnet. Die Stirnseite 133 des vorderen Endes 124 der Düsennadel 123 bildet zusammen mit der Wandung 134 des Absatzes 127 eines Drosselquerschnitt 135.

In Fig. 21, 22 besteht die Einspritzdüse 141 aus einem Gehäuse 142 und einer Düsennadel 143. Das vordere Ende 144 der Düsennadel 143 ragt ständig in eine im Gehäuse 142 angeordnete Düsenbohrung 145 mit Paßsitz hinein. In ihrem Mantel 146 sind vier Kanäle 147 angeordnet. Die hintere Stirnkante 148 der Düsenbohrung 145 dient zusammen mit den Stirnkanten 149 der Kanäle 147 hier als Steuerkanten. Schiebt man die Düsennadel 143 soweit in die Düsenbohrung 145, daß die Kanäle 147 völlig abgedeckt sind, so ist die Einspritzdüse 141 verschlossen. Durch Zurückziehen kann man den Drosselquerschnitt 150, d.h. den freien Durchströmquerschnitt, einstellen. Die Drosselung ist am geringsten, wenn der freigegebene Durchströmquerschnitt der Summe der Querschnitte der vier Kanäle 147 entspricht. Zieht man dann die Düsennadel 143 noch weiter zurück, bleibt der Drosselquerschnitt 150 konstant. Es versteht sich, daß hier im Vergleich zu der Ausführungsform gemäß Fig. 1 die Stellschraube und die Feder zum Justieren der Düsennadel 143 jeweils in entgegengesetzter Richtung wirksam sein müssen. Eine entsprechende Umkonstruktion ist dem Fachmann eine Selbstverständlichkeit.

## Ansprüche

1. Vorrichtung zum Vermischen von mindestens zwei fließfähigen, massiven oder zelligen Kunststoff bildenden Reaktionskomponenten, bestehend aus einem eine Mischkammer (2) mit Auslaßöffnung enthaltenden Gehäuse (1), wobei Zuleitungen (4, 5) zu in die Mischkammer (2) weisenden Einspritzdüsen (6, 7, 21, 31, 51, 61, 71, 91, 101, 121, 141) führen und jede Einspritzdüse (6, 7, 21, 31, 51, 61, 71, 91, 101, 121, 141) eine verstellbare Düsennadel (10, 23, 33, 53, 63, 73, 93, 103, 123, 143) und eine Düsenbohrung (16, 25, 35, 55, 65, 75, 95, 105, 125, 145) aufweist, wobei das mit der Düsenbohrung (16, 25, 35, 55, 65, 75, 95, 105, 125, 145) korrespondierende vordere Ende (15, 24, 34, 54, 64, 74, 94, 104, 124, 144) der Düsennadel (10, 23, 33, 53, 63, 73, 93, 103, 123, 143) und die Düsenbohrung (16, 25, 35, 55, 65, 75, 95, 105, 125, 145) in ihrem Durchmesser aufeinander abgestimmt sind, dadurch gekennzeichnet, daß im Mantel (129, 146) des vorderen Endes (15, 24, 34, 54, 64, 74, 94, 104, 124, 144) und/oder in der Wandung (17, 26, 36, 56, 66, 76, 96, 106) der Düsenbohrung (16, 25, 35, 55, 65, 75, 95, 105, 125, 145) mindestens ein Kanal (18, 27, 37, 38, 57, 67, 68, 77, 78, 97, 107, 108, 132, 147) angeordnet ist und daß das vordere Ende (15, 24, 34, 54, 64, 74, 94, 104, 124, 144) der Düsennadel (10, 23, 33, 53, 73, 93, 103, 123, 143) in jeder Stellung in der Düsenbohrung (16, 25, 35, 55, 65, 75, 95, 105, 125, 145) geführt ist.

2. Vorrichtung nach Anspruch 1, dadurch gekennzeichnet, daß der Kanal (18, 27, 37, 38, 57, 67, 68, 97, 132) innerhalb der Düsenbohrung (16, 25, 35, 55, 65, 95, 125) endet und daß die Stirnkante (20, 28, 41, 58, 98, 133) des vorderen Endes (15, 24, 34, 54, 64, 94, 124) der Düsennadel (10, 23, 33, 53, 63, 93, 124) als Steuerkante dient.

3. Vorrichtung nach Anspruch 1, dadurch gekennzeichnet, daß der Kanal (147) am Ende (144) der Düsennadel (143) angeordnet ist und daß die von der Mischkammer wegweisende Kante (148) der Düsenbohrung (141) als Steuerkante dient.

4. Vorrichtung nach Anspruch 1, dadurch gekennzeichnet, daß der Kanal (77, 78, 107, 108) aus zwei Abschnitten (77, 78, 107, 108) besteht, von denen der eine Abschnitt (78, 108) am vorderen Ende (74, 104) der Düsennadel (73, 103) und der andere Abschnitt (77, 107), mit dem ersten Abschnitt (78, 108) überlappbar, in der Wandung (76, 106) der Düsenbohrung (75, 105) angeordnet ist, und daß die Stirnkanten (79, 80, 109) und/oder Längskanten (81, 82, 110) dieser Abschnitte (77, 78, 107, 108) Steuerkanten darstellen.

5. Vorrichtung nach Anspruch 4, dadurch gekennzeichnet, daß der im vorderen Ende (104) der Düsennadel (103) angeordnete Abschnitt (108) des Kanal (108) als zur Mischkammer hin offene Ausnehmung ausgebildet ist.

6. Vorrichtung nach einem der Ansprüche 1 bis 5, dadurch gekennzeichnet, daß der in der Wandung (26, 36, 56, 66, 96, 106, 126) der Düsenbohrung (25, 35, 55, 65, 95, 105, 125) angeordnete Kanal (27, 37, 38, 57, 67, 68, 97, 107, 127) schräg in die Düsenbohrung (25, 35, 55, 65, 95) einmündet.

7. Vorrichtung nach einem der Ansprüche 1 bis 6, dadurch gekennzeichnet, daß der Kanal (67) unter einem Winkel (spiralförmig) verläuft.

8. Vorrichtung nach einem der Ansprüche 1 bis 7, dadurch gekennzeichnet, daß der Kanal (57) tangential einmündet.

9. Vorrichtung nach einem der Ansprüche 1 bis 8, dadurch gekennzeichnet, daß sich das Ende des Kanals (27) verjüngt.

10. Vorrichtung nach einem der Ansprüche 1 bis 9, dadurch gekennzeichnet, daß mehrere Kanäle (18, 27, 37, 38, 57, 67, 68, 77, 78, 97, 107, 108, 132, 147) symmetrisch um die Mittelachse der Düsennadel (10, 23, 33, 53, 63, 73, 93, 103, 123, 143) angeordnet sind.

11. Vorrichtung nach Anspruch 10, dadurch gekennzeichnet, daß die Kanäle (37, 38) unterschiedliche Länge aufweisen.

FIG. 1

0 271 803

FIG. 2

FIG. 3 (A-B)

FIG. 4

FIG. 5(C-D)

Le A 24 949

FIG. 6

FIG. 7 (E-F)

FIG. 8

FIG. 9 (G-H)

FIG. 10

FIG. 11 (I-K)

FIG. 12

FIG. 13 (L-M)

Le A 24 949

FIG. 14

FIG. 15 (N-O)·

FIG. 16    FIG. 17    FIG. 18

FIG. 19

FIG. 20 (Q-R)

FIG. 21

FIG. 22 (S-T)

Le A 24 949